## Europäisches Patentamt
## European Patent Office
## Office européen des brevets

(19)

(11) Veröffentlichungsnummer: **0 096 794**
**B1**

(12) **EUROPÄISCHE PATENTSCHRIFT**

(45) Veröffentlichungstag der Patentschrift:
16.07.86

(51) Int. Cl.⁴: **C 08 F 2/22**

(21) Anmeldenummer: **83105350.9**

(22) Anmeldetag: **31.05.83**

(54) Kontinuierliches Emulsionspolymerisationsverfahren.

(30) Priorität: **11.06.82 DE 3222002**

(43) Veröffentlichungstag der Anmeldung:
**28.12.83 Patentblatt 83/52**

(45) Bekanntmachung des Hinweises auf die Patenterteilung:
**16.07.86 Patentblatt 86/29**

(84) Benannte Vertragsstaaten:
**DE FR GB IT NL**

(56) Entgegenhaltungen:
**FR - A - 2 104 041**

(73) Patentinhaber: **Röhm GmbH, Kirschenallee
Postfach 4242, D-6100 Darmstadt 1 (DE)**

(72) Erfinder: **Sütterlin, Norbert, Dr., Am Horeth 23,
D-6105 Ober-Ramstadt (DE)**
Erfinder: **Blitz, Hans Dieter, Büchnerstrasse 9,
D-6104 Seeheim-Jugenheim 1 (DE)**
Erfinder: **Mager, Theodor, Haardtring 314,
D-6100 Darmstadt (DE)**
Erfinder: **Jagsch, Karl-Heinz, Ludwigstrasse 1,
D-6080 Gross-Gerau (DE)**
Erfinder: **Tessmer, Dieter, Feuerbachstrasse 77,
D-6090 Rüsselsheim (DE)**

## Beschreibung

### Gebiet der Erfindung

Die Erfindung betrifft ein Verfahren zur kontinuierlichen Herstellung von wässrigen Kunststoffdispersionen in einem rohrförmigen Reaktor.

### Stand der Technik

Verfahren zur kontinuierlichen Emulsionspolymerisation sind in grosser Zahl bekannt. Sie werden meistens in kontinuierlich durchströmten Rührkesseln durchgeführt, die — ebenso wie bei der diskontinuierlichen Arbeitsweise — in der Regel aus Stahl bestehen und manchmal innen emailliert sind. Es sind auch Rohrreaktoren für die kontinuierliche Emulsionspolymerisation beschrieben. Sie ergeben ein engeres Verweilzeitspektrum und infolgedessen eine engere Teilchengrössenverteilung und gestatten durch das günstigere Verhältnis von Oberfläche zu Volumen eine intensivere Wärmeabführung.

Schon FR 842 829 (1938) beschreibt die kontinuierliche Emulsionspolymerisation in einer Rohrschlange von z.B. 60 m Rohrlänge und 25 mm Rohrdurchmesser. Als Material für die Rohrschlange werden Stahl und Glas vorgeschlagen. In FR 847 151 wird für eine ähnliche Polymerisationsvorrichtung der Werkstoff, aus dem das Rohr besteht, gar nicht erwähnt. M. Ghosh und T.H. Forsyth (ACS Symposium Series 24 «Emulsion Polymerization») haben zur wissenschaftlichen Untersuchung der kontinuierlichen Emulsionspolymerisation von Styrol eine Rohrschlange aus Stahl von 73 m Länge und 1,27 cm Rohrdurchmesser verwendet.

Technisch haben sich diese einfachen Rohrreaktoren nicht eingeführt, weil immer mit der Gefahr von Verstopfungen durch Wandansetzungen gerechnet werden muss. Da der Ort der Verstopfung in einem Stahlrohr von aussen nicht feststellbar und die Verstopfung schwierig zu beseitigen ist, geht häufig durch eine kleine Verstopfung der ganze Rohrreaktor verloren.

Es hat nicht an Bemühungen gefehlt, Verstopfungen bei der kontinuierlichen Emulsionspolymerisation in Rohrreaktoren durch Einbau von Rührern und dergleichen zu vermeiden. In FR 843 845 wird ein solcher Rohrreaktor von 3,4 m Länge, 12 cm Durchmesser und durchgehendem Rührer beschrieben. Der Werkstoff von Rohr und Rührer wird nicht erwähnt. Ein ähnlicher Rohrreaktor, der innen emailliert ist, wird in DE 880 938 beschrieben. In dem Rohrreaktor gemäss DE 1 137 216 ist zusätzlich zum Rührer ein in der Längsachse des Rohres verschiebbarer Abstreifer vorgesehen, der Ansetzungen vom Rührer und der Rohrwandung entfernt. Auch hier wird der Werkstoff nicht erwähnt.

### Aufgabe und Lösung

Die kontinuierliche Emulsionspolymerisation in einem rohrförmigen Reaktor soll in der Weise verbessert werden, dass die Gefahr der Rohrverstopfung vermindert und hohe Verluste an Anlageninvestitionen infolge von nicht entfernbaren Verstopfungen ausgeschlossen werden. Die Aufgabe wird bei einem Verfahren gemäss dem Oberbegriff des Anspruches 1 erfindungsgemäss dadurch gelöst, dass die wässrige Monomeremulsion während der Polymerisation durch einen Rohrreaktor geleitet wird, dessen innere Oberfläche aus einem gegebenenfalls fluorierten gesättigten Polyolefin besteht.

### Vorteile

Nachdem durch die Erfindung die Bedeutung des Werkstoffes der Rohrwandung erkannt worden ist, muss es im Rückblick überraschen, wie wenig Aufmerksamkeit bisher der Wahl des Rohrwerkstoffes zuteil geworden ist. Die erfindungsgemäss im Reaktor eingesetzten Werkstoffe zeichnen sich durch äusserst geringe Haftung an dem entstehenden Polymerisat aus. Daher entsteht bei fachgerechter Polymerisationsführung auch nach langer Betriebsdauer wenig oder gar kein Wandbelag. Eventuelle Ablagerungen lassen sich durch Spülung mit Wasser leichter als von jedem anderen Werkstoff lösen und ausschwemmen. Selbst ein dicht schliessender Koagulatorpfropfen kann durch Einpressen von Wasser oder anderen Flüssigkeiten meistens losgelöst und ausgestossen werden. Bei der bevorzugten Ausführungsform, bei der ein Schlauch aus billigem extrudiertem Material verwendet wird, lohnt sich der Arbeits- und Zeitaufwand zum Herauspressen eines Pfropfens im allgemeinen nicht. Die Materialkosten für einen extrudierten Kunststoffschlauch sind so niedrig, dass sie neben den übrigen Anlagen- und Betriebskosten nicht ins Gewicht fallen. Sobald störende Ansetzungen oder Verstopfungen auftreten, wird der gesamte Schlauchreaktor mit geringen Materialkosten ersetzt.

### Der Rohrreaktor

besteht wenigstens an der Innenwandung aus einem gegebenenfalls fluorierten Polyolefin. Bevorzugte Werkstoffe sind Polyäthylen, Polypropylen und Polytetrafluoräthylen. Sie können als dünne Schicht auf der Innenwandung von Metallrohren angebracht sein, was vor allem für den zuletzt genannten Werkstoff in Betracht kommt. In diesem Falle genügt eine Schichtdicke von wenigen Mikrometern.

Vorzugsweise besteht der Rohrreaktor durchgehend aus den beanspruchten Werkstoffen. Rohre aus Polypropylen sind ziemlich steif und können mit Steckverbindungen aneinandergefügt werden. Schläuche aus Polyäthylen sind wesentlich weicher und biegsamer und können in einem Stück in nahezu beliebiger Lage und Windungsform angeordnet werden. Wegen ihres niedrigen Preises und der einfachen Verlegung bilden Polyäthylenschläuche das bevorzugte Material für den Rohrreaktor. Sie können, insbesondere wenn das Reaktionsgemisch unter Überdruck steht, durch Textil- oder Drahteinlagen oder -Umwicklungen verstärkt sein.

Für eine technische Produktionsanlage werden Rohre bzw. Schläuche von etwa 1 bis 15 cm, vorzugsweise 2-4 cm Innendurchmesser verwendet. In Zonen geringerer Polymerisationsgeschwindigkeit bzw. geringerer Wärmeentwicklung können dickere Schläuche verwendet werden als in Zonen mit hoher Polymerisationsgeschwindigkeit. Gegebenenfalls werden mehrere Rohre bzw. Schläuche parallel betrieben. Zweckmässig werden an den Zuführungen und Ableitungsstellen, wo der Schlauchreaktor mit den vor- und nachgeschalteten Anlagenteilen in Verbindung steht, zusätzliche, absperrbare Anschlussstutzen für einen oder mehrere weitere Schlauchreaktoren angebracht, damit man im Falle des Auswechselns eines Schlauches den Materialstrom ohne Unterbrechung des kontinuierlichen Verfahrens in einen anderen Schlauchreaktor umleiten kann. Die Länge des Rohrreaktors richtet sich nach der erforderlichen Verweilzeit und der Strömungsgeschwindigkeit. Sie kann z.B. 10 bis 200 m betragen, obwohl in besonderen Fällen auch noch längere Reaktoren verwendet werden können. Stündliche Durchsätze vom 10- bis 40fachen Reaktorvolumen sind erreichbar.

Rohrreaktoren haben bei der kontinuierlichen Emulsionspolymerisation vor Rührkesseln den Vorteil, dass eine engere Teilchengrössenverteilung erreicht wird. Dieser Vorteil wird auch dann erreicht, wenn nicht die gesamte Polymerisation in einem Rohrreaktor durchgeführt wird. Man kann z.B. einen Saatlatex kontinuierlich in einem Rührkessel erzeugen und zusammen mit weiteren Monomeren in den Rohrreaktor einführen. In diesem Falle entsteht eine breitere Teilchengrössenverteilung als wenn die Herstellung des Saatlatex kontinuierlich in einem Rohrreaktor erfolgt oder ein diskontinuierlich vorfabrizierter Saatlatex kontinuierlich eingespeist wird. Man kann auch mehrere hintereinandergeschaltete Rohrreaktoren verwenden und an den Zwischenstellen kühlen oder eine frische Monomeremulsion zuführen.

Der Rohrreaktor kann zur Aufrechterhaltung der erwünschten Polymerisationstemperatur von aussen gekühlt oder erwärmt werden. Dazu kann ein Rohrmantel verwendet werden. Einfacher ist es den Rohrreaktor in einem Behälter anzuordnen, der von dem Kühlmedium durchströmt wird. In der Regel wird mit Wasser gekühlt oder erwärmt. Bei etwa adiabatischer Betriebsweise kann der Reaktor von Luft umgeben sein.

*Verfahrensführung*

Die zu polymerisierenden Monomeren werden zunächst in einem gesonderten, vorzugsweise kontinuierlich durchströmten Rührgefäss in einer emulgiermittelhaltigen Wasserphase emulgiert. In der Regel wird dabei gleichzeitig der Polymerisationsinitiator zugegeben; wasserlösliche Redox-Initiatoren sind bevorzugt. Gewünschtenfalls kann die Polymerisation in einem nachgeschalteten Rührgefäss gestartet werden. Die Emulsion wird sodann — vorzugsweise mittels einer Pumpe — in den Rohrreaktor eingeführt.

Bis zu einem Monomerengehalt von etwa 40 Gew.-%, bezogen auf das Gewicht der Emulsion, lässt sich die Polymerisationswärme im allgemeinen leicht abführen. Wenn Dispersionen mit einem Feststoffgehalt über 40 Gew.-% hergestellt werden sollen, empfiehlt sich die Polymerisation einer höchstens etwa 40%igen Monomeremulsion in einem ersten Rohrreaktor bis zum weitgehenden Umsatz der Monomeren und anschliessendes Emulgieren von weiteren Monomeren. Dies kann in einem kleinen, kontinuierlich durchströmten Emulgiergefäss bei kurzer Verweilzeit geschehen, jedoch wird bevorzugt ein Teil des Umsatzes in einem solchen Zwischengefäss durchgeführt. Die Durchmischung der zugesetzten Monomeren mit dem polymerisierenden Reaktionsgemisch kann gefördert werden, wenn man die Monomeren bzw. die Monomerenemulsion durch eine enge Düse mit hoher Geschwindigkeit in das Reaktionsgemisch einspritzt. Die erzeugte Emulsion kann in einem weiteren Rohrreaktor oder in einem Rührkessel weiter polymerisiert werden. Im letztgenannten Fall wird die Teilchengrössenverteilung breiter. Man kann auch die Emulgierung und die weitere Polymerisation im gleichen Rührkessel durchführen. Zur Herstellung von Dispersionen von 60% oder mehr Feststoffgehalt können in der angegebenen Weise auch drei oder mehr Polymerisationsstufen hintereinandergeschaltet werden. Insgesamt sollen wenigstens 30 Gew.-%, vorzugsweise wenigstens 40 Gew.-% der umgesetzten Monomeren in einem oder mehreren Rohrreaktoren polymerisiert werden.

Nach dem Verfahren der Erfindung können praktisch alle Monomeren, aus denen wässrige Polymerisatdispersionen herstellbar sind, polymerisiert werden. Die wichtigsten Monomeren sind die Ester der Acryl- und Methacrylsäure, Styrol, Vinylester, Vinylchlorid, Äthylen, Propylen, Butadien und ihre Gemische. Vorzugsweise werden Monomere oder Monomerengemische verarbeitet, die bei Normaldruck oberhalb der Polymerisationstemperatur sieden, vor allem Acryl- und Methacrylalkylester (mit 1 bis 14 C-Atomen im Alkoholrest), Styrol und Vinylacetat als Hauptmonomere. Als modifizierende Comonomere, die im allgemeinen in Mengen bis zu etwa 30 Gew.-% (bez. auf Gesamtmonomerengewicht) eingesetzt werden, kommen z.B. Acryl- und Methacrylsäure, ihre Amide, Methylolamide, Nitrile, Aminoalkylester oder Hydroxyalkylester, sowie Vinylidenchlorid in Betracht. Temperatur und Druck werden so eingestellt, dass keine Gasblasen im Reaktionsgemisch auftreten. Die Polymerisationsbedingungen hinsichtlich der zu verwendenden Initiatoren und Emulgatoren und sonstigen Hilfsmittel, sowie der Temperatur und Verweilzeit unterscheiden sich nicht von anderen bekannten kontinuierlichen Emulsionspolymerisationsverfahren. Günstig ist eine niedrige Anfangstemperatur im Bereich von 20 bis 40°C, so dass man die Temperatur während einer Verweilzeit von beispielsweise 3 bis 10 min mehr oder weniger adiabatisch auf höchstens 80 bis 90°C ansteigen lassen kann.

Je höher der Umsatzanteil ist, der in einem Rohrreaktor durchgeführt wird, um so ähnlicher ist die entstehende Dispersion einer unter entsprechenden Verfahrensbedingungen diskontinuierlich in einem Rührkessel erzeugten Dispersion. Die mittlere Teilchengrösse (Gewichtsmittelwert) liegt im allgemeinen zwischen 40 und 500 nm.

*Beispiel 1*

Ein 70 m langer Polyäthylenschlauch von 6 mm Durchmesser und 1 mm Wandstärke wurde zur ersten Hälfte in einem Wasserbad gelagert und auf 30°C temperiert, während die zweite Schlauchhälfte in einem Luftbad lag. Durch diesen Schlauch wurde eine Emulsion aus

| 2300 | g | Äthylacrylat |
|---|---|---|
| 208,3 | g | Methylolmethacrylamid, 60%ige wässrige Lösung |
| 75 | g | Methylmethacrylat |
| 5 | g | Ammoniumperoxodisulfat |
| 0,05 | g | Eisensulfat |
| 50 | g | anionischer Emulgator (Triisobutylphenol, mit 7 Mol Äthylenoxyd umgesetzt, sulfatiert, Na-Salz, 50%ige wässrige Lösung) |
| 3000 | g | Wasser |

geschickt und kurz vor Eintritt in den Schlauch eine Lösung aus

| 10 | g | Natriumbisulfit |
|---|---|---|
| 2000 | g | Wasser |

im Verhältnis Emulsion zu Bisulfitlösung wie 2,8 : 1 eindosiert. Die Durchsatzgeschwindigkeit des polymerisierenden Systems betrug 7,65 kg/h. Es wurde eine koagulatfreie, stabile Dispersion von 31,8% Feststoffgehalt und einem mittleren Teilchendurchmesser von 92 nm bei enger Teilchengrössenverteilung erhalten. Der Umsatz am Schlauchende betrug 95,8%.

*Beispiel 2*

Es wurde wie in Beispiel 1 verfahren, nur dass anstelle der dort angegebenen Emulsion eine Emulsion aus

| 1150 | g | Äthylacrylat |
|---|---|---|
| 1225 | g | Methylmethacrylat |
| 83,33 | g | Methylolmethacrylamid, 60%ige wässrige Lösung |
| 75 | g | Methacrylamid |
| 100 | g | der gleichen anionischen Emulgatorlösung |
| 10 | g | Ammoniumperoxodisulfat |
| 0,05 | g | Eisensulfat |
| 3000 | g | Wasser |

eingesetzt und kurz vor Eintritt in den Schlauch eine Lösung aus

| 2000 | g | Wasser |
|---|---|---|
| 20 | g | Natriumbisulfit |

im Verhältnis Emulsion zu Bisulfitlösung wie 2,8 : 1 eindosiert wurde. Die Durchsatzgeschwindigkeit des polymerisierenden System betrug 7,66 kg/h. Es wurde eine koagulatfreie, stabile Dispersion von 32,1% Feststoffgehalt und einem mittleren Teilchendurchmesser von 76 nm bei enger Teilchengrössenverteilung erhalten.

*Beispiel 3*

Es wurde wie in Beispiel 1 verfahren, nur dass anstelle der dort angegebenen Emulsion eine Emulsion aus

| 1775 | g | Butylacrylat |
|---|---|---|
| 1775 | g | Methylmethacrylat |
| 166,67 | g | Methylmethacrylamid, 60%ige wässrige Lösung |
| 25 | g | Methacrylamid |
| 25 | g | Methacrylsäure |

| 50 | g | der gleichen anionischen Emulgatorlösung |
|---|---|---|
| 5 | g | Ammoniumperoxodisulfat |
| 0,05 | g | Eisensulfat |
| 3000 | g | Wasser |

eingesetzt und kurz vor Eintritt in den Schlauch eine Lösung aus

| 2000 | g | Wasser |
|---|---|---|
| 10 | g | Natriumbisulfit |

im Verhältnis Emulsion zu Bisulfitlösung wie 2,8 : 1 eindosiert wurde. Die Durchsatzgeschwindigkeit des polymerisierenden Systems betrug 7,63 kg/h. Es wurde eine koagulatfreie stabile Dispersion von 31,2% Feststoffgehalt und einem mittleren Teilchendurchmesser von 74 nm bei enger Teilchengrössenverteilung erhalten.

*Beispiel 4*

Es wurde wie in Beispiel 1 verfahren, nur dass anstelle der dort angegebenen Emulsion eine Emulsion aus

| 1250 | g | Butylacrylat |
|---|---|---|
| 1125 | g | Methylmethacrylat |
| 75 | g | Methacrylamid |
| 50 | g | Methacrylsäure |
| 100 | g | der gleichen anionischen Emulgatorlösung |
| 10 | g | Ammoniumperoxodisulfat |
| 0,05 | g | Eisensulfat |
| 3000 | g | Wasser |

eingesetzt und kurz vor Eintritt in den Schlauch eine Lösung aus

| 2000 | g | Wasser |
|---|---|---|
| 20 | g | Natriumbisulfit |

im Verhältnis Emulsion zu Bisulfitlösung wie 2,8 : 1 eindosiert wurde. Die Durchsatzgeschwindigkeit des polymerisierenden Systems betrug 7,63 kg/h. Es wurde eine koagulatfreie, stabile Dispersion von 32,8% Feststoffgehalt und einem mittleren Teilchendurchmesser von 68 nm bei enger Teilchengrössenverteilung erhalten.

*Beispiel 5*

Das Verfahren gemäss Beispiel 4 wurde mit dem Unterschied wiederholt, dass als Reaktor anstelle eines Polyäthylenschlauches ein Rohr aus Polypropylen von 70 m Länge, 6 mm Innendurchmesser und 1 mm Wandstärke verwendet wurde. Damit wurde das gleiche Ergebnis wie beim Beispiel 4 erreicht.

*Beispiel 6*

Ein 70 m langer Polyäthylenschlauch von 6 mm Durchmesser und 1 mm Wandstärke wurde zur ersten Hälfte in einem Wasserbad auf 60°C temperiert und zur zweiten Hälfte in einem Luftbad gelagert. Durch diesen Schlauch wurde eine Emulsion aus

| 1250 | g | Styrol |
|---|---|---|
| 1225 | g | Butylacrylat |
| 25 | g | Methacrylsäure |

250 g der in Beispiel 1 beschriebenen anionischen Emulgatorlösung
10 g Ammoniumperoxodisulfat
0,05 g Eisensulfat
3000 g Wasser

geschickt und kurz vor Eintritt in den Schlauch eine
Lösung aus

2000 g Wasser
20 g Natriumbisulfit

im Verhältnis Emulsion zu Bisulfitlösung wie 2,85 : 1
eindosiert. Die Durchsatzgeschwindigkeit des polymerisierenden Systems betrug 7,78 kg/h. Es wurde
eine koagulatfreie, stabile Dispersion von 30,9%
Feststoffgehalt und einem mittleren Teilchendurchmesser von 60 nm bei enger Teilchengrössenverteilung erhalten.

*Beispiel 7*

Ein 70 m langer Polyäthylenschlauch von 6 mm
Durchmesser und 1 mm Wandstärke wurde zur ersten Hälfte in einem Wasserbad auf 40°C temperiert
und zur zweiten Hälfte in einem Luftbad gelagert.
Durch diesen Schlauch wurde eine Emulsion aus

1125 g Methylmethacrylat
1125 g Butylacrylat
250 g Vinylacetat
100 g der in Beispiel 1 angegebenen Lösung
eines anionischen Emulgators
20 g Ammoniumperoxodisulfat
0,1 g Eisensulfat
3000 g Wasser

geschickt und kurz vor Eintritt in den Schlauch eine
Lösung aus

2000 g Wasser
40 g Natriumbisulfit

im Verhältnis Emulsion zu Bisulfitlösung wie 2,75 : 1
eindosiert. Die Durchsatzgeschwindigkeit des polymerisierenden Systems betrug 7,66 kg/h. Es wurde
eine koagulatfreie, stabile Dispersion von 31,6%
Feststoffgehalt und einem mittleren Teilchendurchmesser von 75 nm bei enger Teilchengrössenverteilung erhalten.

*Beispiel 8*

Ein 25 m langer Polytetrafluoräthylenschlauch von
8 mm Durchmesser und 1 mm Wandstärke wurde zur
ersten Hälfte in einem Wasserbad auf 30°C temperiert und zur zweiten Hälfte in einem Luftbad gelagert. Durch diesen Schlauch wurde eine Emulsion
aus

781,25 g Butylacrylat
703,13 g Methylmethacrylat
44,88 g Methacrylamid
31,25 g Methacrylsäure
62,5 g der in Beispiel 1 angegebenen anionischen Emulgatorlösung
6,25 g Ammoniumperoxodisulfat
0,031 g Eisensulfat
1875 g Wasser

geschickt und kurz vor Eintritt in den Schlauch eine
Lösung aus

1250 g Wasser
12,5 g Natriumsulfit

im Verhältnis Emulsion zu Bisulfitlösung wie 2,79 : 1
eindosiert. Die Durchsatzgeschwindigkeit des polymerisierenden Systems betrug 4,77 kg/h. Es wurde
eine koagulatfreie, stabile Dispersion von 32,5%
Feststoffgehalt und einem mittleren Teilchendurchmesser von 70 nm bei enger Teilchengrössenverteilung erhalten.

*Beispiel 9*

Es wurde wie in Beispiel 8 verfahren, nur dass anstelle des Polytetrafluoräthylenschlauches ein 25 m
langes Stahlrohr mit Teflonauskleidung verwendet
wurde. Es wurde eine koagulatfreie stabile Dispersion von 32,2% Feststoffgehalt und einem mittleren
Teilchendurchmesser von 70 nm bei enger Teilchengrössenverteilung erhalten.

*Beiepiel 10 (Vergleichsversuch)*

Es wurde wie in Beispiel 8 verfahren, nur dass anstelle des Polytetrafluoräthylenschlauches ein 25 m
langes Rohr aus V4A-Stahl ohne Teflonbeschichtung verwendet wurde. Im Gegensatz zu den fluorierten Polyolefinschläuchen bzw. dem mit Polytetrafluoräthylen beschichteten Stahlrohr baute sich
von der Wand her ein starker Belag auf und führte
nach etwa 1,5 Stunden zur Verstopfung des Reaktors.

*Beispiel 11*

Es wurde ein mehrstufiges Polymerisationsverfahren durchgeführt, wobei die 1. Stufe wie in Beispiel 4 beschrieben polymerisiert wurde. Nach
70 m Schlauchlänge wurde in einer statischen
Mischzelle, mit konzentrisch angeordneten Zulaufdüsen, die eine gute Durchwirbelung im Mischraum
bewirkten, ein zweiter Anteil des gleichen Monomerengemisches wie in der 1. Stufe mit einer Geschwindigkeit von 2,5 kg/h zudosiert und in einem weiteren
Teil eines Polyäthylenschlauches von 35 m Länge, 6
mm Durchmesser und 1 mm Wandstärke auspolymerisiert. Die Kühlung dieses Schlauchteils kann
sowohl mit Luft als auch mit Wasser erfolgen.
Unabhängig vom Kühlmedium wurde eine stabile Dispersion mit einem Feststoffgehalt von 50,3% erhalten, der mittlere Teilchendurchmesser betrug 112
nm.

*Beispiel 12*

Es wurde wie in Beispiel 11 mit dem Unterschied
verfahren, dass anstelle der statischen Mischzelle
ein 100-ml-Dreihalsrundkolben mit Blattrührer als
Mischgefäss für die Eindosierung des zweiten Monomerenanteils verwendet wurde. Es wird eine koagulatfreie, stabile Dispersion von 49,2% Feststoffgehalt und einem mittleren Teilchendurchmesser von
100 nm erhalten.

*Beispiel 13*

Es wurde wie in Beispiel 4 verfahren, nur dass anstelle der verwendeten Bisulfitlösung eine Lösung aus

2000 g  Wasser
  20 g  Natriumhydroxymethylsulfinat

verwendet wurde. Es wurde eine koagulatfreie Dispersion von 32,0% Feststoffgehalt und einem mittleren Teichendurchmesser von 72 nm bei enger Teilchengrössenverteilung erhalten.

*Beispiel 14*

Durch die in Beispiel 1 beschriebene Vorrichtung wurde eine Emulsion aus

  705  g  Methylmethacrylat
 1648,7 g  Äthylacrylat
  28,6 g  Methacrylsäure
  684,6 g  eines nichtionischen Emulgators (Isononylphenol, mit 100 Mol Äthylenoxid umgesetzt, 35%ige Lösung)
  0,76 g  FeSO₄-Lösung 5%ig
 2664,5 g  Wasser
  7,6 g  Ammoniumperoxodisulfat

geschickt und kurz vor Eintritt in den Schlauch eine Lösung aus

  10,53 g  Natriumbisulfit
 1879,5 g  Wasser

im Verhältnis Emulsion zu Bisulfitlösung wie 3,03 : 1 eindosiert. Die Durchsatzgeschwindigkeit des polymerisierenden Systems betrug 7,63 kg/h. Es wurde eine koagulatfreie, stabile Dispersion von 33% Feststoffgehalt und einem mittleren Teilchendurchmesser von 70 nm bei enger Teilchengrössenverteilung erhalten.

*Beispiel 15*

Ein 70 m langer Polyäthylenschlauch von 6 mm Durchmesser und 1 mm Wandstärke wurde in zwei Wasserbädern gelagert, von denen das erste 35°C hatte.und das zweite durch Frischwasserzulauf auf 20°C gehalten wurde. Durch diesen Schlauch wurde eine Emulsion aus

 1475   g  Methylmethacrylat
 3448   g  Äthylacrylat
  59,8 g  Methacrylsäure
  716   g  Isononylphenol mit 100 Mol Äthylenoxid umgesetzt, 35%ige Lösung
  19,93 g  Ammoniumperoxodisulfat
   1   g  Eisensulfat, 5%ige wässrige Lösung
 4281   g  Wasser

geschickt und kurz vor Eintritt in den Schlauch eine Lösung aus

  47,7 g  Natriumbisulfit
  852   g  Wasser

im Verhältnis Emuslion Bisulfitlösung wie 11 : 1 eindosiert. Durchsatzgeschwindigkeit des polymerisierten Systems betrug 10,9 kg/h. Nach dem Anspringen der Reaktion muss der Polyäthylenschlauch in zunehmenden Masse mit Wasser gekühlt werden.

Es wurden eine koagulatfreie, stabile Dispersion von 43,9% Feststoffgehalt und einem mittleren Teilchendurchmesser von 106 nm bei enger Teilchengrössenverteilung erhalten.

*Beispiel 16*

Ein 35 ml langer Polyäthylenschlauch von 6 mm Durchmesser und 1 mm Wandstärke wurde so in ein Wasserbad gelagert, dass er auf 35°C temperiert werden konnte. Durch diesen Schlauch wurde eine Emulsion aus

 2896   g  Methylmethacrylat
 6771   g  Äthylacrylat
  117,4 g  Methacrylsäure
  39   g  Ammoniumperoxodisulfat
   2   g  Eisensulfat, 5%ige wässrige Lösung
 1757   g  der in Beispiel 15 Emulgatorlösung
13419   g  Wasser

geschickt und kurz vor Eintritt in den Schlauch eine Lösung aus

  21,4 Natriumbisulfit
  478,6 g  Wasser

eindosiert. Nach 35 m Schlauchlänge wurde der erhaltene Latex in einen 5-l-Rührkessel eingeleitet und ein 2. Anteil an Monomeren, bestehend aus

 1730   g  Äthylacrylat
  740   g  Methylmethacrylat
  30   g  Methacrylsäure

mit einer Geschwindigkeit von 2,5 kg/h zudosiert. Der Umsatz erreichte etwa 80%. Der Latex wurde aus dem Rührgefäss in einen zweiten Rührkessel gleicher Grösse übergeführt, wo der Umsatz auf über 95% anstieg. Es wurde eine koagulatfreie, stabile Dispersion von 41,8% Feststoffgehalt und einem mittleren Teilchendurchmesser von 106 nm erhalten.

*Beispiel 17*

Es wurde wie in Beispiel 16 verfahren, nur dass anstelle des Monomerenzulaufs eine Emulsion bestehend aus

 1730   g  Äthylacrylat
  740   g  Methylmethacrylat
  30   g  Methacrylsäure
   9,97 g  Ammoniumperoxodisulfat
  449,4 g  der in Beispiel 15 verwendeten Emulgatorlösung
 3429   g  Wasser

in den ersten Rührkessel zudosiert wurde. Dort wurde ein Feststoffgehalt von 39% erreicht und in einem zweiten Reaktor auf einen End-Feststoffgehalt von 41% gesteigert.

*Beispiel 18 (Vergleichsversuch)*

Ein 50 m langer Schlauch aus Polyvinylchlorid von 1 cm Innendurchmesser wurde mit einer Emulsion bestehend aus

 1328,64 g  Äthylacrylat
  568,32 g  Methylmethacrylat
  23,04 g  Methacrylsäure

274,37 g nichtionischer Emulgator (Isononylphenol, 100 Mol Äthylenoxid umgesetzt, 35%ige wässrige Lösung)
  3,84 g Ammoniumperoxodisulfat
1863,88 g Wasser

beschickt und kurz vor Eintritt in den Schlauch eine
Lösung aus

  5,4      g Natriumbisulfit
  0,0192 g Eisensulfat
1000       g Wasser

im Verhältnis Emulsion zu Bisulfitlösung wie 4,04 : 1
eindosiert. Es baute sich von der Wand her ein starker
Belag auf und führte allmählich zur Verstopfung des
Reaktors.


## Patentansprüche

1. Verfahren zur kontinuierlichen Herstellung von wässrigen Kunststoffdispersionen durch Emulgieren von radikalisch polymerisierbaren Monomeren in einer wässrigen Phase in Gegenwart eines Emulgiermittels und durch radikalische Polymerisation während des kontinuierlichen Durchlaufs der Emulsion durch einen rohrförmigen Reaktor, dadurch gekennzeichnet, dass die Emulsion durch einen Rohrreaktor geleitet wird, dessen innere Oberfläche aus einem gegebenenfalls fluorierten gesättigten Polyolefin besteht.

2. Verfahren nach Anspruch 1, dadurch gekennzeichnet, dass der verwendete Reaktor aus einem Rohr bzw. Schlauch aus einem gesättigten Polyolefin besteht.

3. Verfahren nach Anspruch 2, dadurch gekennzeichnet, dass das Rohr bzw. der Schlauch aus Polyäthylen oder Polypropylen besteht.

4. Verfahren nach den Ansprüchen 1 bis 3, dadurch gekennzeichnet, dass die radikalische Polymerisation bei 20 bis 90°C mittels eines Redox-Initiatorsystems ausgelöst wird.

5. Verfahren nach den Ansprüchen 1 bis 4, dadurch gekennzeichnet, dass die zur Herstellung der Kunststoffdispersion eingesetzten Monomeren zu wenigstens 30 Gew.-% in dem Rohrreaktor umgesetzt werden.

6. Verfahren nach Anspruch 5, dadurch gekennzeichnet, dass die Polymerisation nach dem Austritt aus dem Rohrreaktor in einem kontinuierlich durchströmten Rührgefäss fortgeführt wird.

7. Verfahren nach den Ansprüchen 1 bis 6, dadurch gekennzeichnet, dass an wenigstens einer Stelle des Rohrreaktors und/oder in das Rührgefäss weitere Mengen des bzw. der Monomeren in die polymerisierende Emulsion kontinuierlich eingemischt werden.

8. Verfahren nach Anspruch 7, dadurch gekennzeichnet, dass die polymerisierende Emulsion durch wenigstens drei Polymerisationszonen geleitet wird und dass sich die Polymerisationszonen in einem ersten Rohrreaktor, einem daran anschliessenden Mischgefäss, in welchem eine weitere Monomermenge zugemischt wird, und in einem daran anschliessenden zweiten Rohrreaktor befinden.

9. Verfahren nach den Ansprüchen 1 bis 8, dadurch gekennzeichnet, dass die Reaktion wenigstens zum Teil in einem Bündel von mehreren parallel durchflossenen Rohrreaktoren durchgeführt wird.


## Claims

1. Process for continuously preparing aqueous plastics dispersions by emulsifying radically polymerisable monomers in an aqueous phase in the presence of an emulsifier and by radical polymerisation during the continuous passage of the emulsion through a tube reactor, characterised in that the emulsion is passed through a tube reactor the inner surface of which consists of an optionally fluorinated saturated polyolefin.

2. Process as claimed in claim 1, characterised in that the reactor used consists of a tube or hose of a saturated polyolefin.

3. Process as claimed in claim 2, characterised in that the tube or hose consists of polyethylene or polypropylene.

4. Process as claimed in claims 1 to 3, characterised in that the radical polymerisation is initiated at 20 to 90°C by means of a Redox initiator system.

5. Process as claimed in claim 1 to 4, characterised in that the monomers used to prepare the plastics dispersion are reacted in a quantity of at least 30% by weight in the tube reactor.

6. Process as claimed in claim 5, characterised in that after the reaction mixture has left the tube reactor polymerisation proceeds in an agitator vessel through which the mixture flows continuously.

7. Process as claimed in claims 1 to 6, characterised in that further quantities of the monomer or monomers are continuously mixed into the polymerising emulsion at at least one point in the tube reactor and/or in the agitator vessel.

8. Process as claimed in claim 7, characterised in that the polymerising emulsion is passed through at least three polymerisation zones and in that the polymerisation zones are located in a first tube reactor, an adjoining mixing vessel in which a further quantity of monomer is added and in an adjoining second tube reactor.

9. Process as claimed in claim 1 to 8, characterised in that the reaction is carried out at least partly in a bundle of several tube reactors through which the reaction mixture flows in parallel.


## Revendications

1. Procédé pour la préparation en continu de dispersions aqueuses de matières plastiques par émulsification de monomères susceptibles de polymérisation radicalaire, dans une phase aqueuse en présence d'un émulsionnant, et par polymérisation radicalaire pendant le passage continu de l'émulsion à travers un réacteur tubulaire, caractérisé en ce que l'émulsion est envoyée à travers un réacteur tubulaire dont la surface intérieure est faite d'une polyoléfine saturée, éventuellement fluorée.

2. Procédé selon la revendication 1, caractérisé en ce que le réacteur utilisé est constitué par un tube ou un tuyau flexible en une polyoléfine saturée.

3. Procédé selon la revendication 2, caractérisé en ce que le tube ou le tuyau flexible est fait de polyéthylène ou de polypropylène.

4. Procédé selon l'une quelconques des revendications 1 à 3, caractérisé en ce que la polymérisation radicalaire est déclenchée à une temperature de 20 à 90°C au moyen d'un système initiateur redox.

5. Procédé selon l'une quelconque des revendications 1 à 5, caractérisé en ce que les monomères utilisés pour la préparation de la dispersion de matière plastique sont transformés à raison d'au moins 30% en poids dans le réacteur tubulaire.

6. Procédé selon la revendication 5, caractérisé en ce qu'après la sortie du réacteur tubulaire, la polymérisation est poursuivie dans un récipient à agitation traversé par un écoulement continue.

7. Procédé selon l'une quelconque des revendications 1 à 6, caractérisé en ce qu'en un point au moins du réacteur tubulaire et/ou dans le récipient à agitation, des quantités supplementaires du ou des monomères sont incorporées en continu dans l'émulsion en cours de polymérisation.

8. Procédé selon la revendication 7, caractérisé en ce que l'émulsion à polymériser est envoyée à travers au moins trois zones de polymérisation et en ce que ces zones de polymérisation se trouvent dans un premier réacteur tubulaire, dans un récipient mélangeur qui lui fait suite et dans lequel une quantité supplémentaire de monomères est incorporée, et dans un second réacteur tubulaire qui fait suite à ce récipient.

9. Procédé selon l'une quelconque des revendications 1 à 8, caractérisé en ce que la réaction est conduite, au moins en partie, dans un faisceau de plusieurs réacteurs tubulaires parcourus en parallèle par le courant.